(19) Europäisches Patentamt / European Patent Office / Office européen des brevets

(11) **EP 2 019 728 B1**

(12) **FASCICULE DE BREVET EUROPEEN**

(45) Date de publication et mention de la délivrance du brevet:
**06.05.2015 Bulletin 2015/19**

(21) Numéro de dépôt: **07731349.2**

(22) Date de dépôt: **24.04.2007**

(51) Int Cl.:
**B01D 71/82** *(2006.01)* **G05D 21/02** *(2006.01)*

(86) Numéro de dépôt international:
**PCT/FR2007/000690**

(87) Numéro de publication internationale:
**WO 2007/125191 (08.11.2007 Gazette 2007/45)**

(54) **MEMBRANE SELECTIVE DES IONS LITHIUM**

LITHIUM-IONEN SELEKTIVE MEMBRAN

LITHIUM ION-SELECTIVE MEMBRANE

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **24.04.2006 FR 0603612**

(43) Date de publication de la demande:
**04.02.2009 Bulletin 2009/06**

(73) Titulaire: **Electricité de France**
**75008 Paris (FR)**

(72) Inventeurs:
• **BERGER, Martial**
**92260 Fontenay aux Roses (FR)**
• **COSTARRAMONE, Nathalie**
**64360 Monein (FR)**

• **CASTETBON, Alain**
**64390 Sauveterre (FR)**

(74) Mandataire: **Thomas, Nadine**
**Cabinet Blétry & Associés**
**82 Boulevard de Sébastopol**
**75003 Paris (FR)**

(56) Documents cités:
EP-A- 0 551 769 WO-A-93/09427
US-A- 5 192 417 US-B1- 6 508 921

• KITAZAWA S ET AL: "LIPOPHILIC CROWN-4 DERIVATIVES AS LITHIUM IONOPHORES", JOURNAL OF THE AMERICAN CHEMICAL SOCIETY, ACS PUBLICATIONS, US, vol. 106, 1 January 1984 (1984-01-01), page 6978, XP001002383, ISSN: 0002-7863, DOI: 10.1021/JA00335A019

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne une membrane sélective des ions lithium, une électrode sélective des ions lithium comportant une telle membrane et un dispositif pourvu d'une telle électrode permettant la mesure de la concentration en lithium dans un fluide tel que le fluide du circuit primaire de refroidissement d'un réacteur d'une centrale nucléaire à eau pressurisée.

Dans les réacteurs nucléaires à eau pressurisée, le coeur du réacteur est constitué d'assemblages de barreaux contenant des pastilles enrichies en matière fissible soumis à un flux de neutrons permettant de libérer l'énergie des fissions nucléaires. De manière à contrôler l'activité du réacteur, on introduit de l'acide borique utilisé dans le fluide du circuit primaire pour la régulation du flux de neutrons, l'isotope 10 de l'atome de bore de la molécule de l'acide borique possédant, en effet, en tant que « poison neutronique » la propriété d'absorber les neutrons.

Aussi, la concentration en atomes de bore 10 dépend de l'épuisement du combustible et de la variation de puissance du réacteur.

Toutefois, l'utilisation de l'acide borique engendre un certain nombre de phénomènes de corrosion généralisée, tels que la génération de radioéléments résultant de la corrosion qui migrent vers des zones singulières du circuit primaire. En effet, dans les conditions de fonctionnement du réacteur (température moyenne de 303°C), le pH du fluide primaire se situe dans un domaine où se produit une corrosion généralisée des matériaux de contact (aciers austénitiques notamment), qui se caractérise par le relâchement et le transport de produits de corrosion qui s'activent sous flux neutronique par passage dans le coeur du réacteur. Ces produits de corrosion activés, émetteurs de rayonnements gamma et bêta, sont responsables de la majorité des doses reçues par le personnel, notamment pendant les travaux de maintenance réalisés lors des arrêts de tranches.

De plus, surviennent également dans certaines situations particulières d'exploitation, des perturbations dans la répartition du flux neutronique et donc des perturbations dans le fonctionnement du combustible, ainsi qu'une perturbation du flux hydraulique du circuit primaire pouvant être associées à la présence de produits de corrosion.

Pour résoudre ce problème, on se doit de maintenir un pH du circuit primaire à une valeur de référence dite « de moindre corrosion », c'est-à-dire pour une température de 300°C, une valeur de pH attendue située entre 7,2 et 7,4 selon les recommandations internationales. Pour maintenir ce pH à la valeur de référence désirée, on introduit dans le circuit primaire de refroidissement, une base pour fixer pH, en neutralisant partiellement le bore, cette base étant la lithine ou hydroxyde de lithium (LiOH), qui entraîne par elle-même peu de problème de corrosion.

De manière à maintenir le pH à sa valeur de consigne, il est nécessaire de respecter une loi de variation de concentration en lithine et en bore, plus connue sous le nom de spécification lithine décroissante. Pour ce faire, on doit effectuer des mesures de la concentration de lithium dans le circuit primaire de refroidissement. Ainsi, tel que cela est notamment décrit dans le document EP-A-0 094 884, on prélève un échantillon d'eau dans le circuit primaire et on mesure la concentration en lithium par spectrométrie atomique. Si la concentration en lithium n'est pas satisfaisante notamment si le fluide primaire a nécessité des borications et des dilutions lors des variations de puissance, on ajuste celle-ci dans le circuit sous forme d'un appoint de lithine ou de l'élimination d'un excès de lithium, puis on effectue de nouveau une mesure de contrôle. Toutefois, l'ensemble de ces opérations est relativement lourd à mettre en oeuvre puisqu'il est nécessaire de disposer d'un laboratoire pour y loger le matériel nécessaire à la mise en oeuvre de cette mesure effectuée par spectrométrie atomique. En outre, ce matériel est relativement onéreux, nécessitant notamment des consommables chers (gaz et étalons) et demande une technicité avérée de l'opérateur chargé de la mesure, ainsi qu'un délai de mise en service significatif. En conséquence, une telle mesure n'est généralement réalisée qu'au plus deux fois par jour, l'ajustement de la concentration n'intervenant alors pas avec une précision suffisante.

On connaît également par le document EP-A-0 294 283, un procédé de mesure de la concentration en lithium dans le circuit primaire de refroidissement d'un réacteur à eau pressurisée, dans lequel on mesure la conductivité électrique totale de l'eau de refroidissement ou d'un échantillon de celle-ci, pour déterminer ensuite la concentration en lithium à une température t mesurée, selon la relation :

$$\left[Li^+\right]=0,1\cdot\left[\lambda_t+(0,223\cdot[Li+r]+0,03)\cdot(25-t)\right]+\beta$$

$\beta$ représentant notamment un terme correctif tenant compte de la présence d'impuretés éventuelles dans l'eau de refroidissement du circuit primaire, le terme $\beta$ étant déterminé par mesure auxiliaire périodique de la concentration en lithium par spectrométrie atomique. Par conséquent, ce procédé et le dispositif pour sa mise en oeuvre ne permettent pas de s'affranchir totalement de la spectrométrie atomique et nécessitent donc encore la présence du matériel nécessaire in situ.

On connaît également des électrodes potentiométriques munies de membranes sélectives des ions lithium principalement employées dans le cadre d'analyses biologiques.

Ainsi, dans le document EP 0 551 769 est décrit une électrode notamment sélective des ions lithium, utilisable pour des analyses dans les milieux biologiques. Cette électrode comporte une membrane sélective des ions lithium qui contient en tant qu'ionophore le 6,6 dibenzyl-14-couronne-4-éther, en tant que support polymère du polychlorure de vinyle (PVC) dans une proportion supérieure à 40% en poids de la composition totale, en tant que plastifiant l'éther de nitrophenyloctyle associé à du trioctyle phosphate l'ensemble dans une proportion de supérieure à 60%, ainsi que du borate de tetrakis (p-chlorophényle) de potassium dans une proportion inférieure à 1%.

Dans le document US 6 508 921 est décrit une électrode munie d'une membrane sélective des ions lithium comprenant le 6,6 dibenzyl-14-couronne-4-éther (2%), du PVC (30 à 40%), de l'éther de nitrophenyloctyle (40 à 60%) associé à du trioctyle phosphate (5 à 15%) ainsi que du borate de tetrakis (p-chlorophényle) de potassium (0,1%).

Dans le document WO 93/09427, est décrite une électrode sensible aux cations comprenant notamment une membrane sensible aux cations comprenant en tant que ionophore du lithium le 6,6 dibenzyl-14-couronne-4-éther (0,66%), comme polymère du PVC (33%), ainsi que du borate de tetrakis (p-chlorophényle) de potassium comme agent conducteur (0,044%), le plastifiant étant un adipate, représentant environ 66% en poids de la composition totale.

Toutes ces membranes sont utilisables pour des analyses biologiques. Toutefois, on a pu constater qu'elles ne pouvaient être utilisées pour effectuer des mesures de la concentration de lithium dans le circuit primaire de refroidissement, milieu hautement radioactif.

L'invention concerne un procédé de détermination de la concentration en ions lithium dans le fluide primaire d'un réacteur à eau pressurisée de centrale nucléaire, caractérisé en ce qu'il consiste :

- à mesurer la différence de potentiel entre une électrode sélective des ions lithium, celle-ci comprenant un élément de référence, une solution interne de chlorure de lithium, ainsi qu'une membrane sélective, plongée dans la solution dont on mesure la concentration en lithium et une électrode de comparaison plongée dans cette même solution ; ladite membrane sélective comprenant un support polymère, un plastifiant, un composé conducteur ainsi qu'un composé ionophore spécifique des ions lithium,

  ledit composé ionophore est le dibenzyl-14-couronne-4, et représente entre 0,5 et 3 % en poids de la composition totale de la membrane ; le support polymère est le polychlorure de vinyle (PVC) et représente 25 à 30% en poids de la composition totale de la membrane ; le plastifiant est l'éther de o-nitrophényloctyle (le NPOE) et représente de 65 à 72% en poids de la composition totale de la membrane ; et le composé conducteur est le borate de tetrakis (p-chlorophényle) potassium et représente de 0,2 à 1,5 % en poids de la composition totale de la membrane ; et

- à déterminer la concentration en lithium à partir de cette mesure de différence de potentiel mesurée entre ces deux électrodes, qui obéit à la loi de Nernst.

La présente invention permet de proposer un dispositif de mesure de la concentration en lithium, en particulier dans un circuit de refroidissement du réacteur d'une centrale nucléaire à eau pressurisée, relativement simple à mettre en oeuvre tel qu'une mesure de la concentration en lithium par mesure potentiométrique, en particulier à l'aide d'une nouvelle électrode sélective des ions lithium.

En particulier, il convient que le dispositif de mesure et plus particulièrement l'électrode répondent à des critères techniques particuliers liés à l'environnement spécifique d'utilisation, c'est-à-dire dans une centrale nucléaire. Notamment, l'électrode et en particulier la membrane équipant cette électrode ne doivent pas être sensibles à l'irradiation.

A cet effet, l'invention propose une membrane spécifique des ions lithium présentant des caractéristiques de spécificité très élevées et qui présente notamment des caractéristiques de résistance à l'irradiation lui permettant d'être utilisée avec du fluide prélevé dans le circuit primaire de refroidissement d'un réacteur d'une centrale nucléaire à eau pressurisée.

L'invention réalise une électrode comportant une telle membrane de manière à être sélective des ions lithium et qui peut être utilisée également avec du fluide primaire prélevé dans le circuit primaire de refroidissement d'un réacteur d'une centrale nucléaire à eau pressurisée.

Un objet est de proposer un dispositif de mesure de la concentration en lithium par potentiométrie, comportant une électrode sélective aux ions lithium et une électrode dite de comparaison dont le potentiel serait fixé constant, ce dispositif devant pouvoir être utilisé pour mesurer la concentration en lithium dans le circuit primaire de refroidissement d'un réacteur à eau pressurisée.

Un objet est de proposer un dispositif de mesure de la concentration en lithium par potentiométrie, comportant une électrode sélective aux ions lithium qui ne sera pas interférée par les espèces habituellement contenues dans le circuit primaire de refroidissement d'un réacteur à eau pressurisée et à ce titre, ne nécessiterait pas de traitement particulier de ce dernier.

Ainsi, la membrane de l'électrode sélective aux ions lithium doit pouvoir être utilisée dans des conditions particulières, notamment pouvoir présenter des caractéristiques de résistance à l'irradiation compte-tenu de son environnement d'utilisation.

Selon une forme de réalisation préférée, la membrane comporte 0,8 à 2% de dibenzyl-14-couronne-4, 27 à 30% de PVC, 65 à 71% de NPOE et 0,5 à 1,4% de KTpCIPB, les pourcentages représentant le pourcentage de chaque constituant en poids de la composition totale de la membrane.

On a pu constater que de manière très avantageuse, une membrane utilisée selon l'invention présente des qualités non-altérées sous irradiation, qui font que cette membrane peut être utilisée de manière sûre dans un environnement nucléaire.

En effet, on a pu observer que sous une dose d'irradiation intégrée de 320 Gy (soit 32000 Rad), ce qui est considérable, le comportement de la membrane n'est pas modifiée de manière notable.

Le procédé de fabrication d'une telle membrane consiste à dissoudre complètement le support polymère, le plastifiant, le composé conducteur et le dibenzyl-14-couronne-4 dans du tétrahydrofuranne (THF), sous agitation magnétique à température ambiante, transvaser la solution limpide obtenue pour la cristalliser par évaporation du THF, et à récupérer la membrane ainsi formée.

Une électrode sélective des ions lithium, comprenant un élément de référence interne constitué d'un fil d'argent recouvert de chlorure d'argent (AgCl), une solution interne de chlorure de lithium ainsi qu'une membrane sélective des ions lithium telle que celle évoquée précédemment.

Selon une forme de réalisation préférée de l'électrode selon l'invention, celle-ci est constituée d'un corps d'électrode, d'un bouchon connecteur et d'un logement pour la membrane, ces trois parties constituant l'électrode étant réalisée en Polyacétal (encore dénommé polyoxyméthylène) (POM).

De manière avantageuse, le bouchon connecteur étant en POM, il est possible de souder directement un fil d'argent recouvert de chlorure d'argent (AgCl), en tant qu'élément de référence interne. Cet élément de référence interne s'étend dans le corps de l'électrode contenant la solution de chlorure de lithium.

Le logement pour la membrane est réalisé au sein d'un habitacle présentant une structure offrant un remplacement aisé et rapide de la membrane. Ainsi, cet habitacle est constitué d'un support sur lequel est fixable de manière réversible la membrane par l'intermédiaire d'une coiffe.

Selon une forme de réalisation préférée, le support comporte une cavité dans laquelle peut être insérée la membrane, la coiffe venant fixer la membrane étant traversée par un canal de forme conique, dont la partie la moins évasée est située du côté de la membrane, de sorte que lorsque l'électrode est plongée dans une solution, un film mince de solution à mesurer est au contact de la membrane. On obtient ainsi une meilleure précision de mesure pour les faibles concentrations de l'ion à mesurer.

Ainsi, la membrane présente une tenue très satisfaisante aux températures de l'échantillon de fluide primaire prélevé pour la mesure du lithium, c'est-à-dire des températures se trouvant dans une plage allant jusqu'à 45°C.

En outre, la membrane utilisée selon l'invention, permet un fonctionnement constant de l'électrode quelle que soit la concentration d'acide borique contenu dans le fluide mesuré.

De même, la membrane utilisée selon l'invention présente une sélectivité élevée vis-à-vis des ions lithium telle que la présence d'autres cations tels que le sodium ($Na^+$), le potassium ($K^+$) et l'ammonium ($NH_4^+$) qui n'ont quasiment aucune influence sur le fonctionnement de l'électrode selon l'invention. L'électrode sélective aux ions lithium ne subira pas d'interférences par les espèces contenues dans le circuit primaire de refroidissement d'un réacteur à eau pressurisée et à ce titre, celui-ci ne nécessitera pas de traitement particulier.

Une électrode sélective des ions lithium selon l'invention peut avantageusement être utilisée pour déterminer la concentration en Lithium d'une solution aqueuse par potentiométrie.

Aussi, on prévoit un dispositif de mesure de la concentration en ions lithium dans un milieu aqueux tel que le fluide du circuit primaire de refroidissement d'un réacteur à eau pressurisée, qui comporte une première électrode de mesure dite de comparaison plongée en permanence dans une solution de référence d'ions lithium dont le potentiel est fixé constant et une seconde électrode de mesure sélective des ions lithium selon l'invention, plongée dans la solution à mesurer, les deux solutions étant reliées par un pont salin, des moyens de mesure de la différence de potentiel entre les deux électrodes, ainsi que des moyens d'analyse et de calcul de la concentration en ions lithium à partir de la différence de potentiel mesurée.

Ainsi de manière très avantageuse, le dispositif de mesure utilisé selon l'invention permet de déterminer la concentration en ions lithium de manière rapide et fiable à partir de la différence de potentiel entre les deux électrodes, le potentiel développé par une électrode sélective en fonction de l'activité (donc de la concentration) d'un ion donné, ici $Li^+$, obéissant à la loi de Nernst :

$$E = E_0 + \left(\frac{R \cdot T}{n \cdot F}\right) Ln \left[Li^+\right]$$

dans laquelle E est le potentiel développé à tout instant par l'électrode (V), $E_0$ est le potentiel standard de l'électrode (V), R est la constante des gaz parfaits ($8,31 J^{-1}. K.mole^{-1}$), T est la température en K, n est la valence du $Li^+$, n étant ci égal à 1, F est la constante de Faraday (96500 C) et $[Li^+]$ est l'activité (assimilé à la concentration) en Li+ en $eq.l^{-1}$ dans

la gamme de concentration utilisée dans le fluide primaire.

La mesure étant simple à effectuer, le contrôle de la concentration en lithium dissous dans le fluide primaire d'un réacteur à eau pressurisée peut être effectuée régulièrement et fréquemment, ce qui n'était pas le cas avec la spectrométrie atomique.

Selon une forme de réalisation préférée de l'invention, l'électrode dite de comparaison serait constituée par toute électrode de référence externe dont le potentiel serait fixé constant pour les conditions de mesure précitées.

Les moyens de mesure, d'analyse et de calcul sont avantageusement constitués par un ionomètre.

Un recalibrage journalier du dispositif est facilement réalisable par simple mise en contact de l'électrode de mesure avec une solution de lithium de composition identique à la solution de lithium de référence, la différence de potentiel résultante devant être nulle, il suffit de régler les moyens de mesure, et/ou d'analyse et/ou de calcul pour recalibrer correctement le dispositif selon l'invention.

Par conséquent, l'invention offre une solution simple et économique à mettre en oeuvre pour réaliser une détermination de la concentration en lithium d'un fluide, qui ne nécessite plus un matériel lourd comme peut l'être celui permettant de réaliser la spectrométrie atomique.

On décrira maintenant l'invention plus en détail en référence à des exemples de réalisation et au dessin dans lequel :

La figure 1 représente une vue en coupe d'une électrode selon l'invention ;

La figure 2 représente une vue en coupe de l'habitacle de l'électrode dans lequel est fixée la membrane selon l'invention ; et

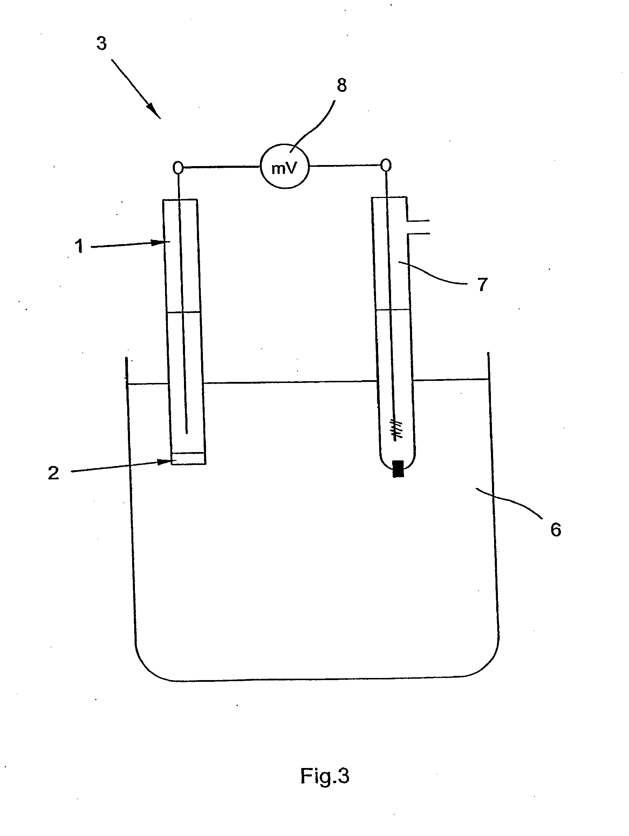

La figure 3 représente schématiquement un dispositif de mesure selon l'invention.

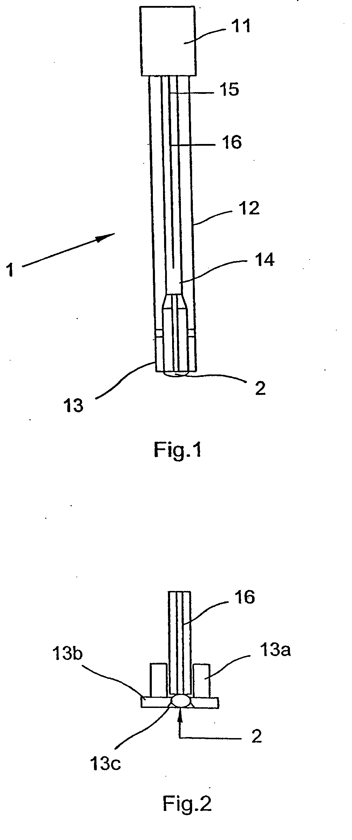

Comme on peut le voir à la figure 1, l'électrode 1 selon l'invention présente un bouchon 11 comportant un connecteur coaxial, un corps d'électrode 12 et un habitacle 13 pour la membrane 2 selon l'invention.

Le corps d'électrode 12 définit un canal 14 dans lequel se trouve une électrode interne de référence constitué d'un fil d'argent 15 recouvert de chlorure d'argent (AgCl) et plongé dans une solution interne 16 de chlorure de lithium LiCl.

L'habitacle 13 est constitué d'un support 13a définissant un logement pour la membrane 2 et sur lequel se positionne une coiffe 13b pour fixer de manière réversible la membrane 2. Cette coiffe 13b est percée d'un canal 13c de forme conique permettant la formation d'un film très fin de solution interne sur la membrane 2.

Une telle électrode 1 permet ensuite de réaliser un dispositif de mesure 3 de la concentration en ions lithium en solution dans un fluide aqueux.

La solution à mesurer 6 est de préférence mise sous agitation magnétique. On plonge dans cette solution à mesurer 6, une électrode 1 selon l'invention pourvue de la membrane 2 sélective des ions lithium et une électrode de référence 7. Les deux électrodes 1 et 7 sont reliées à un ionomètre 8.

Il va de soi que la forme de réalisation de l'invention qui a été décrite ci-dessus a été donnée à titre purement indicatif et nullement limitatif, et que de nombreuses modifications peuvent être facilement apportées par l'homme de l'art sans pour autant sortir du cadre de l'invention.

**Revendications**

1. Procédé de détermination de la concentration en ions lithium dans le fluide primaire d'un réacteur à eau pressurisée de centrale nucléaire,
   **caractérisé en ce qu'**il consiste :

   - à mesurer la différence de potentiel entre une électrode sélective des ions lithium, celle-ci comprenant un élément de référence, une solution interne de chlorure de lithium, ainsi qu'une membrane sélective, plongée dans la solution dont on mesure la concentration en lithium et une électrode de comparaison plongée dans cette même solution ;
   ladite membrane sélective comprenant un support polymère, un plastifiant, un composé conducteur ainsi qu'un composé ionophore spécifique des ions lithium,
   ledit composé ionophore est le dibenzyl-14-couronne-4, et représente entre 0,5 et 3 % en poids de la composition totale de la membrane ; le support polymère est le polychlorure de vinyle (PVC) et représente 25 à 30% en poids de la composition totale de la membrane ; le plastifiant est l'éther de o-nitrophényloctyle (le NPOE) et représente de 65 à 72% en poids de la composition totale de la membrane ; et le composé conducteur est le borate de tetrakis (p-chlorophényle) potassium et représente de 0,2 à 1,5 % en poids de la composition totale de la membrane ; et

- à déterminer la concentration en lithium à partir de cette mesure de différence de potentiel mesurée entre ces deux électrodes, qui obéit à la loi de Nernst.

**Patentansprüche**

1. Verfahren zur Bestimmung der Konzentration von Lithiumionen in dem Primärfluid eines Druckwasserreaktors eines Atomkraftwerks,
   **dadurch gekennzeichnet, dass** das Verfahren in Folgendem besteht:

   - Messen der Potentialdifferenz zwischen einer lithiumionenselektiven Elektrode, die ein Referenzelement, ein interne Lithiumchloridlösung sowie eine selektive Membran umfasst, und die in die Lösung getaucht wird, deren Lithiumkonzentration gemessen wird, und einer Vergleichselektrode, die in dieselbe Lösung getaucht wird;
   wobei die besagte selektive Membran einen polymeren Träger, einen Weichmacher, eine leitende Verbindung sowie eine lithiumionenspezifische Ionophorverbindung umfasst,
   die besagte Ionophorverbindung Dibenzyl-14-Krone-4 ist und zwischen 0,5 und 3 Gew.-% der Gesamtzusammensetzung der Membran darstellt; der polymere Träger Polyvinylchlorid (PVC) ist und 25 bis 30 Gew.-% der Gesamtzusammensetzung der Membran darstellt; der Weichmacher o-Nitrophenyloctylether (NPOE) ist und 65 bis 72 Gew.-% der Gesamtzusammensetzung der Membran darstellt und die leitende Verbindung Kalium-Tetrakis-(p-chlorphenyl)borat ist und von 0,2 bis 1,5 Gew.-% der Gesamtzusammensetzung der Membran darstellt; und
   - Bestimmen der Lithiumkonzentration aus dieser Messung der zwischen diesen beiden Elektroden gemessenen Potentialdifferenz, die dem Nernst-Gesetz gehorcht.

**Claims**

1. Method for determining the lithium ion concentration in the primary fluid of a nuclear power pressurised water reactor, of a plant,
   **characterised in that** it consists of:

   - measuring the difference in potential between a lithium ion-selective electrode, said electrode comprising a reference element, an internal lithium chloride solution, and a selective membrane, immersed in the solution wherein the lithium concentration of which is measured and a comparison electrode immersed in the same solution;
   said selective membrane comprising a polymer substrate, a plasticizer, a conductive compound and a lithium ion-specific ionophoric compound,
   said ionophoric compound is dibenzyl-14-crown-4, and represents between 0.5 and 3% by weight of the total composition of the membrane; the polymer substrate is polyvinyl chloride (PVC) and represents 25 to 30% by weight of the total composition of the membrane; the plasticizer is o-nitrophenyloctyl ether (NPOE) and represents 65 to 72% by weight of the total composition of the membrane; and the conductive compound is potassium tetrakis(p-chlorophenyl) borate and represents 0.2 to 1.5% by weight of the total composition of the membrane; and
   - determining the lithium concentration on the basis of this measurement of the difference in potential measured between these two electrodes, which obeys Nernst's law.

Fig.1

Fig.2

Fig.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0094884 A
- EP 0294283 A
- EP 0551769 A
- US 6508921 B
- WO 9309427 A